# EUROPEAN PATENT APPLICATION

(11) **EP 2 987 776 A1**
(43) Date of publication of application: **24.02.2016**
(21) Application number: 14181857.5
(22) Date of filing: 21.08.2014
(51) Int. Cl.: C03C 23/00, B23K 26/00

(54) **Heat treatment of a silicate layer with pulsed carbon dioxide laser**

(71) Applicant: 4JET Technologies GmbH, 52477 Alsdorf (DE)
(72) Inventor: Jetter, Heinz Leonhard, 41836 Hückelhoven (DE)
(74) Representative: Dilg, Haeusler, Schindelmann Patentanwaltsgesellschaft mbH

(57) **Abstract**

Described is in particular a method of heat treatment of a material layer (102) of a material sandwich (100) comprising the material layer (102) and a substrate (104), wherein the substrate (104) comprises a silicon-oxygen - compound and the material layer (102) comprises a silicon-oxygen compound, the method comprising irradiating the material layer (102) with a pulsed laser beam (114) of a carbon dioxide laser (112). According to an embodiment the irradiating is performed so as to selectively heat the material layer (102) and a substrate portion (116) of the substrate (104), wherein the substrate portion (116) faces (e.g. contacts) the material layer (102).

## Description

### FIELD OF INVENTION

The present invention relates to the field of heat treatment of material layers.

### BACKGROUND

WO 99/44822 relates to a method of applying a ceramic layer to an underlayer having a relatively low melting temperature, wherein particles of a ceramic material are provided on said an underlayer, and a mechanical bond between ceramic particles on the one hand and the underlayer on the other hand is brought about by heating. In order to be able to apply a ceramic layer to an underlayer of a synthetic resin material having a relatively low melting temperature, the method is characterized in that a pulsed laser device is used to generate, during a period of time of the order of or shorter than the melting time of the underlayer, a temperature which is at least so high that in addition to the bonding compacting or sintering of the ceramic particles is achieved, the energy generated by the laser device being focused on localized areas of the ceramic particles or of the surface layer of the underlayer, and the wavelength of said laser device being correspondingly adjusted for absorption of this laser radiation by the ceramic particles or by the underlayer. Particles of a ceramic material are provided on the underlayer and, by heating, a mechanical bond between the ceramic particles in the underlayer is brought about. By means of a laser device, a temperature is generated, for a time of the order of or shorter than the melting time of the underlayer which is at least so high that in addition to all compacting or sintering of the ceramic particles is obtained. It is proposed to use a carbon dioxide laser for sintering silicon dioxide nanoparticles on a PP underlayer. The ceramic particles may be provided in the form of a sol-gel solution, e.g. of nanoparticles of silicon dioxide. In accordance with a second aspect, the energy generated by the laser device is focused onto the surface layer of the underlayer, and the wavelength of the laser device is adjusted to the absorption power of the underlayer, the ceramic particles being incorporated in the melted surface layer of the underlayer, and, after solidification of the substance of the underlayer and providing a further layer of ceramic particles, a sintering process is carried out. This further layer of ceramic particles may be provided with one or more layers of sintered ceramic particles.

DE 10 2007 015 635 A1 relates to providing a mechanically stressed surface of a part at least partially formed from hardened steel with a coating produced by applying a sol-gel layer, transforming the sol-gel into a gel and subsequent sintering of the layer with a laser, wherein the power of the laser is controlled so as to not increase the temperature of the part beyond its tempering temperature.

US 5 143 533 A discloses a method of producing thin films by sintering which comprises coating a substrate with a thin film of an inorganic glass forming particulate material possessing the capability of being sintered, and irradiating said thin film of said particulate material with a laser beam of sufficient power to cause sintering of said material below the temperature of the liquidus thereof.

### SUMMARY

In view of the above-described situation, there exists a need for an improved technique to perform a heat treatment of a material layer of a material sandwich comprising the material layer and a substrate, wherein the substrate comprises a silicon-oxygen compound and the material layer comprises a silicon-oxygen compound.

This need may be met by the subject matter according to the independent claims. Advantageous embodiments of the herein disclosed subject matter are described by the dependent claims.

According to a first aspect of the herein disclosed subject matter there is provided a method of heat treatment of a material layer of a material sandwich comprising the material layer and a substrate, the substrate comprising a silicon-oxygen compound and the material layer comprising a silicon-oxygen compound, the method comprising: irradiating the material layer with a pulsed laser beam of a carbon dioxide laser.

This aspect is based on the idea that heat treatment of a material layer of a material sandwich, wherein a substrate and the material layer of the material sandwich comprises a silicon-oxygen compound, may be performed efficiently by using a pulsed carbon dioxide laser which heats the material layer and only to a certain extend a thin portion of the substrate. Even if the material layer of typical thicknesses, e.g. typical antireflection layers absorbs only a relatively small percentage (e.g. in the order of 5% to 20 %) of the power of the pulsed layer beam impinging on the material layer, it was found that surprisingly low energy pulses of a carbon dioxide laser are well suited for effectively heat treatment of the material layer.

According to embodiments of the first aspect, the method is adapted for providing the functionality as described by one or more of the herein mentioned aspects or embodiments and/or for providing the functionality as required or as resulting by one or more of the herein mentioned aspects or embodiments, in particular of the embodiments of the second, third, and fourth aspect.

According to a second aspect of the herein disclosed subject matter there is provided a use of a pulsed carbon dioxide laser for heat treatment of a material layer of a material sandwich comprising the material layer; wherein the substrate comprises a silicon-oxygen compound and the material layer comprises a silicon-oxygen compound.

According to an embodiment of the second aspect, the pulsed carbon dioxide laser is used for heat treatment of the material layer according to the method according to the first aspect or an embodiment thereof.

According to embodiments of the second aspect, the use is adapted for providing the functionality as described by one or more of the herein mentioned aspects or embodiments and/or for providing the functionality as required or as resulting by one or more of the herein mentioned aspects or embodiments, in particular of the embodiments of the first, third, and fourth aspect.

According to a third aspect of the herein disclosed subject matter there is provided a device for heat treatment of a material layer of a material sandwich, the material sandwich comprising the material layer and a substrate, wherein the substrate comprises a silicon-oxygen compound and the material layer comprises a silicon-oxygen compound, the device comprising: a carbon dioxide laser configured for generating a pulsed laser beam and thereby irradiating the material layer of the material sandwich with the pulsed laser beam, thereby performing the heat treatment of the material layer (102).

According to an embodiment of the third aspect, device is configured for heat treatment of a material layer of a material sandwich according to the method of the first aspect or an embodiment thereof.

According to embodiments of the third aspect, the device is adapted for providing the functionality as described by one or more of the herein mentioned aspects or embodiments and/or for providing the functionality as required or as resulting by one or more of the herein mentioned aspects or embodiments, in particular of the embodiments of the first, second, and fourth aspect.

According to an embodiment, the substrate is a glass substrate and/or the material layer is a silicate layer.

According to a further embodiment, the material layer is a porous layer formed by a sol-gel process.

According to a further embodiment, the pulse duration of the pulsed laser beam is between 0.01 microseconds and 5 microseconds, in particular between 0.1 and 1 microseconds.

According to a further embodiment, the areal energy density of a single laser pulse of the pulsed laser beam at a surface of the material layer is between 25 Millijoule per square centimeter (25 mJ/cm²) and 1000 Millijoule per square centimeter (1000 mJ/cm²), in particular between 50 Millijoule per square centimeter (50 mJ/cm²) and 500 Millijoule per square centimeter (500 mJ/cm²).

According to a further embodiment, the pulsed laser beam is generated with a transversally excited intermittently pumped carbon dioxide laser.

According to a further embodiment, the pulsed laser beam is generated with a Q-switched continuously pumped carbon dioxide laser.

According to a further embodiment, the material layer is a surface layer of the material sandwich. According to a further embodiment, the material layer is in contact with the substrate.

According to a fourth aspect of the herein disclosed subject matter there is provided computer program product in the form of a computer program or in the form of a computer readable medium comprising the computer program, the computer program being configured for, when being executed on a data processor device, controlling the method according to the first aspect or an embodiment thereof.

According to embodiments of the fourth aspect, the computer program is adapted for providing the functionality as described by one or more of the herein mentioned aspects or embodiments and/or for providing the functionality as required or as resulting by one or more of the herein mentioned aspects or embodiments, in particular of the embodiments of the first, second, and third aspect.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a method for performing heat treatment of a material layer, a use of a pulsed carbon dioxide laser, a device for heat treatment and respective computer program products. It has to be pointed out that of course any combination of features relating to different aspects of the herein disclosed subject matter is also possible. In particular, some features have been or will be described with reference to apparatus type embodiments whereas other features have been or will be described with reference to method type embodiments. However, a person skilled in the art will gather from the above and the following description that, unless otherwise noted, in addition to any combination of features belonging to one aspect also any combination of features relating to different aspects or embodiments, for example even combinations of features of the apparatus type embodiments and features of the method type embodiments are considered to be disclosed with this application.

The aspects and embodiments defined above and further aspects and embodiments of the herein disclosed subject matter are apparent from the examples to be described hereinafter and are explained with reference to the drawings, but to which the invention is not limited.

### BRIEF DESCRIPTION OF THE DRAWINGS

Fig. 1 shows a material sandwich to be heat treated according to embodiments of the herein disclosed subject matter.
Fig. 2 shows a device for heat treatment according to embodiments of the herein disclosed subject matter.
Fig. 3 shows a further carbon dioxide laser according to embodiments of the herein disclosed subject matter.

### DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of similar or identical features is not repeated in the description of subsequent figures in order to avoid unnecessary repetitions. However, it should be understood that the description of these features in the preceding figures is also valid for the subsequent figures unless noted otherwise.

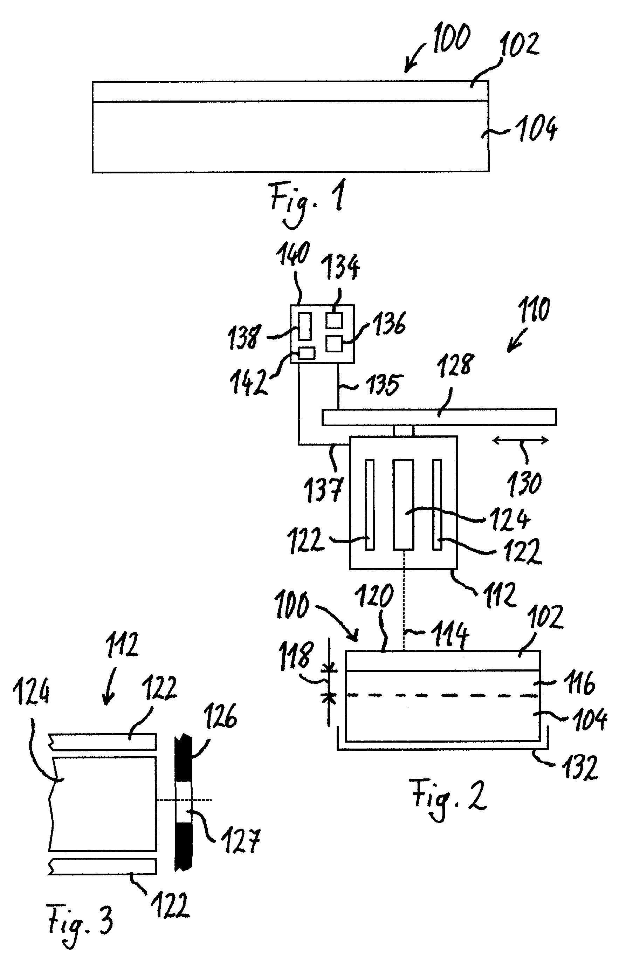

Fig. 1 shows a material sandwich to be heat treated according to embodiments of the herein disclosed subject matter.

The material sandwich 100 comprises a material layer 102 to be heat treated and a substrate 104. According to an embodiment, the material layer 102 is directly located on the substrate 104, i.e. the material layer 102 is in contact with the substrate 104. In other words, in this embodiment the material layer 102 and the substrate 104 form a common interface. According to a further embodiment, the material layer is a surface layer of the material sandwich 100, forming an outer surface of the material sandwich 100, as shown in Fig. 1.

In accordance with an embodiment, heat treatment of the material layer 102 comprises or consists of tempering the material layer 102. In accordance with an embodiment, heat treatment of the material layer 102 comprises or consists of sintering the material layer 102. In accordance with a further embodiment, heat treatment of the material layer 102 increases the abrasion resistance of the material-layer 102.

According to an embodiment, the material layer 102 comprises a silicon oxygen compound. For example, in accordance with an embodiment, the material layer 102 is a silicate layer. According to a further embodiment, the material layer 102 is a porous layer which is e.g. formed by a sol-gel process. According to an embodiment, the density of the material layer 102 is adjusted by the porosity of the material layer 102. For example, according to an embodiment at least one optical property of the material layer, e.g. the refractive index, is adjusted by the porosity of the material layer 102. According to a further embodiment, the material layer 102 is an anti-reflection layer (λ/4 layer).

According to an embodiment, the material layer 102 is a porous silicate layer, e.g. a porous silicate layer formed by a sol-gel process. According to an embodiment the gel contained in a solvent (i.e. the sol-gel) is applied onto the substrate by submerging the substrate in the sol-gel or by roller application of the sol-gel onto the substrate 104. In accordance with an embodiment the porous silicate layer is formed from a gel forming a silicate structure framework. According to an embodiment the porous silicate layer comprises or consists of silicon oxide, e.g. silicon dioxide.

According to an embodiment, the substrate 104 comprises a silicon-oxygen compound. According to a further embodiment, the substrate 104 comprises or consists of silicon dioxide. For example, one application of embodiments of the herein disclosed subject matter is the manufacture of an antireflection layer (material layer) on a surface of a glass plate (substrate). Such as a glass plate may be for example a glass plate covering a photovoltaic cell, a glass plate of a display device (e.g. of consumer electronics, television sets, machine controls, etc.), a glass plate of a shop window, a glass plate of a cabinet, etc.

For example, thermal solar collectors or photovoltaic cells are protected by glass plates against environmental influences and mechanical damages. By reflection on the glass surface up to 10% of the sunlight is lost if the gas plates are not covered by an antireflection layer (coating). Antireflection layers use the wave character of light in order to generate interference by specific overlay of partial waves.

In order to suppress the reflection of the sunlight by destructive interference the antireflection layer preferably has to have the following properties:

The optical path difference between the partial waves reflected on the front surface and the back surface of the antireflective layer must correspond to half of the wavelength. Taking into account the characteristic wavelength of sunlight of about 600 nm in air and the refractive index of the layer, the thickness of the antireflective layer has to be about 100 nanometers (100 nm) = 0.1 micrometers (0.1 µm).

For complete compensation of the partial waves due to destructive interference, the amplitudes of both partial waves have to be equal. In other words, the refractive index of the antireflection layer should be adapted to the refractive index of the surrounding medium (e.g. air) and the refractive index of the substrate material, in particular such that it corresponds to the root of the product of the refractive indices of the surrounding medium (e.g. air (n = 1)) and the substrate material (e.g. glass (n = 1.5)). Hence, in the given example the refractive index of the antireflection layer should be n = √(1 x 1.5) = 1.23.

In practice the above properties are difficult to realize perfectly. However, an antireflection layer manufactured by a sol-gel process comes close to the ideal properties of the antireflection layer. In accordance with an embodiment, the antireflection layer is formed from a gel that forms a silicate structure framework mainly constituted of silicon dioxide. However, the gel is porous wherein the enclosed cavities have sizes in a nanometer range. Hence, these are small compared to the wavelength of the light such that they do not influence the wave character of the light. Nevertheless by varying the concentration and the size of the cavities the density of the porous layer and hence the refractive index can be adapted to the desired value of 1.23.

The gel contained in a solvent can be applied in the desired layer thickness onto the substrate 104. By evaporating the solvent the silicate structure framework with the cavities is formed. Glass plates covered with the sol-gel antireflection layer achieve transmission values of > 98 % for visible light. Without antireflection layer about 92 % are achieved. Hence, for example in case of a photovoltaic cell panel the overall efficiency factor is increased accordingly.

The gel adheres to the glass surface. However, in order to achieve a sufficient abrasion resistance, the gel layer has to be heat treated (e.g. tempered) at about 400 to 500 degrees Celsius (400 °C to 500 °C). Currently, this process is performed in an oven and lasts several minutes. Hence, it constitutes a bottleneck in a continuous production line. In this process, the entire material layer 100 is heated slowly to about 400 to 500 degrees Celsius, remains in the oven for several minutes, and is then cooled down before further processing.

Fig. 2 shows a device 110 for heat treatment according to embodiments of the herein disclosed subject matter.

The device 110 is adapted for heat treatment of a material layer 102 of a material sandwich, e.g. of a material sandwich 100 as described with regard to Fig. 1. In accordance with an embodiment, the material sandwich 100 shown in Fig. 2 comprises a material layer 102 and a substrate 104, wherein the substrate 104 comprises a silicon-oxygen compound. In accordance with a further embodiment, also the material layer 102 comprises a silicon-oxygen compound. The device 110 comprises a carbon dioxide laser 112 which is configured for generating a pulsed laser beam 114 and thereby irradiating the material layer 102 of the material sandwich 100 with the pulsed laser beam. 114 so as to preferentially heat the material layer 102 and a substrate portion 116 of the substrate 104. The substrate portion 116 faces the material layer 102, e.g. abuts on the material layer 102 as shown in Fig. 2. According to an embodiment, the thickness 118 of the substrate portion 116 is defined by the thermal diffusion length of the laser pulse which depends on the pulse duration time. In accordance with an embodiment the thickness 118 of the substrate portion 116 in glass is in a range from 0.5 micrometers to 3.5 micrometers (0.5 µm to 3.5 µm) for a pulse duration in the range of 0.1 microsecond to 5.0 microseconds (0.1 µs - 5.0 µs).

According to a further embodiment, the substrate portion 116 is defined by the optical penetration depth of the laser pulse in the material sandwich. The optical penetration depth of the laser pulse is the depth after which the intensity of the initial laser pulse falls to 1/e (about 37%) of its original value at the surface of the material layer 102. In glass the optical penetration depth for the radiation of the carbon dioxide laser is about 0.5 micrometers (0.5 µm). Accordingly, for a pulse duration of about 0.1 microseconds (0.1 µs) or less the optical penetration depth is the predominant factor for the thickness 118 of the substrate portion 116. For a longer pulse duration the thermal diffusion length is the predominant factor for the thickness 118 of the substrate portion 116. According to an embodiment, the thickness 118 of the substrate portion 116 is larger than the thickness of the material layer. Even in such a case the pulsed laser beam of a carbon dioxide laser was found to be an efficient means for heat treatment of the material layer as long as the material sufficiently absorbs the laser beam. A silicon-oxygen compound having a silicon-oxygen bond provides sufficient absorption of the laser beam of a carbon dioxide layer.

In accordance with an embodiment the substrate 104, comprising a silicon-oxygen compound, absorbs the pulsed laser beam 114, thereby heating up. According to an embodiment, the pulse duration of the pulsed laser beam 114 is adapted so as to define the substrate portion 116 to have a depth 118 which is smaller than a predetermined amount, e.g. which is smaller than 2 micrometer (2 µm), or, in another embodiment, smaller than 1 micrometers (1 µm). Since the substrate portion 116 is facing the material layer 102 (and even more if the substrate portion 116 is abutting on the material layer 102), the heated substrate portion 116 will transfer heat to the material layer 102, thereby heat treating the material layer 102. In accordance with an embodiment, the pulse duration of the pulsed laser beam 114 is between 0.01 microseconds and 5 microseconds, in particular between 0.1 microseconds and 1 microsecond.

According to an embodiment, the areal energy density of a single laser pulse of the pulsed laser beam 114 at a surface 120 of the material layer 102 is between 25 Millijoule per square centimeter and 1000 Millijoule per square centimeter. For example, in accordance with a further embodiment, the areal energy density of a single laser pulse of the pulsed laser beam 114 at the surface of the material layer 102 is in a range between 50 Millijoule per square centimeter (50 mJ/cm²) and 500 Millijoule per square centimeter (500 mJ/cm²).

In accordance with an embodiment, the material layer 102 also comprises a silicon-oxygen compound (e.g. as described with regard to Fig. 1), thereby also absorbing, in an embodiment, part of the pulsed laser beam 114. In such an embodiment, the pulsed laser beam 114 is heating the material layer 102 and the substrate portion 116 of the substrate 104. According to an embodiment, the laser parameters (e.g. pulse duration and areal energy density) are adapted such that part of the pulsed laser beam 114 is absorbed in the material layer 102 and the remaining part of the pulsed laser beam 114 is absorbed in the substrate portion 116. In particular if both the material layer 102 and the substrate 104 comprise a silicon oxygen compound both the material layer 102 and the substrate portion 116 of the substrate 104 are selectively heated.

In a first estimate, a thickness of the material layer (e.g. in the form of an antireflection layer) is assumed to be 0.1 micrometers (µm). In bulk glass the optical penetration depth of the 10 µm radiation of the carbon dioxide laser 112 is about 0.5 micrometers. In the gel (i.e. the silicate structure framework formed by drying the sol-gel) the optical penetration depth of the 1.0 µm radiation of the carbon dioxide laser 112 is about 1 micrometer due to the lower density (compared to bulk silicon dioxide). About 13% of the pulse energy of the pulsed laser beam 114 is therefore absorbed in the exemplary material layer 102. The remaining 87% of the pulse energy heat up the substrate portion 116. For a pulse durations of about 1 microsecond the substrate portion 116 is estimated to have a thickness of 1.5 µm which corresponds to the thermal diffusion length and which is about three times the optical penetration depth. For achieving a temperature of the material layer of about 400°C the required fluence is estimated to about 150 to 300 Millijoule per square centimeter (150 mJ/cm²- 300 mJ/cm²). Accordingly for a 200 Watts TEA laser (TEA = transverse excitation at atmospheric pressure) with 2 Joule pulse energy and 100 Hz repetition rate for a fluence of 150-300 mJ/cm² an area performance of about 600-1200 cm²/s is expected. For example 0.6 square meters (m²) of a photovoltaic cell could therefore be finished in less than 10 seconds.

Alternatively, for a Q-switched 1 kilowatts (1 kW) laser (Q-switched = resonator quality switched), providing 0.2 Joule pulse energy at 5 kilohertz (5 kHz) repetition rate, an area performance of about 3000-6000 cm²/s is expected (corresponding to a cycle time of less than 2 seconds for a 0.6 square meter (m²) substrate).

According to an embodiment, the pulsed laser beam 114 is generated with a transversally excited intermittently pumped carbon dioxide laser. To this end, the carbon dioxide laser 112 comprises exciting elements 122 which located besides a laser medium 124 (carbon dioxide located in a cavity) so as to transversally excite the laser medium 124 in certain time intervals, thereby generating the pulsed laser beam.

In accordance with an embodiment, the device 110 comprises an actuator 128 for moving, indicated at 130, the pulsed laser beam 114 and the material sandwich 100 relative to each other. For example, according to an embodiment the actuator 128 is adapted for moving the carbon dioxide laser 112 with respect to the spatially fixed material sandwich 100, as shown in Fig. 2. According to an embodiment, a holder 132 is provided for spatially fixing the material sandwich 100. In another embodiment, the actuator 128 is adapted for moving the holder 132 with the material sandwich 100 with respect to the (spatially fixed) carbon dioxide laser 112. According to a further embodiment the actuator 128 is adapted for moving the pulsed laser beam 114 over the surface 120 of the material layer 102 by respectively moving at least one deflecting element (not shown in Fig. 2) for the pulsed laser beam 114.

By moving the carbon dioxide laser 112 (or the laser beam 114) and the material sandwich 100 relative to each other, even a large material sandwich can be heat treated according to embodiments of the herein disclosed subject matter. According to an embodiment, the material sandwich 100 has a size of at least 0.25 squaremeters (0.25 m²) or, in another embodiment a size of at least 0.5 squaremeters (0.5 m²). According to an embodiment, the holder 132 is adapted for receiving a material sandwich 100 of such a size. Due to the large average power that can be provided by a pulsed carbon dioxide laser even such large material sandwiches can be heat treated in reasonable time period (usually the time period for the heat treatment by the pulsed carbon dioxide laser is even shorter than the time period required for a heat treatment by a conventional oven).

In accordance with an embodiment, the device 110 comprises an actuator control unit 134 for controlling the actuator 128 so as to thereby control (e.g. over a respective signal path 135) the movement of the holder 132 and the pulsed laser beam 114 relative to each other in a predetermined way, thereby performing a predetermined heat treatment of the material layer 102. In accordance with a further embodiment, the device 110 comprises a laser control unit 136 for controlling (e.g. over a respective signal path 137) the carbon dioxide laser 112 to thereby generate the pulsed laser beam 114.

In accordance with an embodiment, the actuator control unit 134 and the laser control unit 136 are implemented by respective computer programs running on a data processor device 138. According to an embodiment, a controller 140 is provided, the controller including the data processor device 138 and a storage element 142 for storing the computer programs which are adapted to provide the functionality of the actuator control unit 134 and the laser control unit 136 as disclosed herein. Generally, a computer program product may be provided in the form of a computer program or in the form of a computer readable medium comprising the computer program, the computer program being configured for, when being executed on the data processor device 138, controlling one or more methods as disclosed herein, thereby providing the functionality of the device 110 as defined by one or more embodiments of the herein disclosed subject matter.

Fig. 3 shows a further carbon dioxide laser according to embodiments of the herein disclosed subject matter.

In accordance with a further embodiment, the pulsed laser beam 114 is generated with a Q-switched continuously pumped carbon dioxide laser. To this end, the carbon dioxide laser 112 may comprise, as shown in Fig. 3, continuously operated exciting elements 122 and a Q-switching element 126 which is known in the art. As it is known in the art, by the Q-switching element 126 feedback of light into the laser medium 124 from the resonator can be prevented, corresponding to an optical resonator with low quality factor (Q factor), resulting in a high population inversion and a high amount of energy stored in the laser medium 124. After switching in the Q-switching element 126 to a state to which results in the optical resonator to have a high quality factor, stimulated emission occurs resulting in a laser pulse. In accordance with an embodiment, the Q-switching element 126 is a rotating, punched disk which intermittently blocks and clears (e.g. by means of at least one through hole 127) the optical path in the resonator of the laser 112. Hence, although continuously pumped, the emission (i.e. the resulting laser beam) is retrieved in the form of pulses. In this way, the optical power of the pulses is increased compared to the continuous operation of the laser wherein the average power of the laser is not substantially reduced. According to an embodiment, a continuous wave welding laser is converted into a suitable pulsed carbon dioxide laser by such a rotating punched disk, resulting in the following parameters:
Average power: 1.5 kilowatts (kW)
Pulse frequency: 50 kilohertz (kHz)
Pulse duration: 250 nanoseconds (ns)
Pulse power: 120 kilowatts (kW)

At 250 ns pulse duration the thermal diffusion length is comparable with the optical penetration depth. Therefore, heat conduction is not too important in this embodiment. Accordingly the device 110 is designed for an operating fluence of 300 Millijoule per square centimeter (300 mJ/cm²). For a pulse energy of 30 Millijoule (30 mJ), the area of the interaction zone F on the material sandwich 100 is about F = 10 square millimeter (F = 10 mm²).

Welding lasers usually have a high beam quality. Hence the shape of the interaction zone can be adjusted and homogenized to a large extent by suitable optical elements. For example, if a rectangular 10 mm² zone with 0.2 millimeters (0.2 mm) width and 50 millimeters (50 mm) length is chosen, this results in an operating path of 50 millimeters width which can be moved with a track speed of 10 meters per second (10 m/s) at 50 kilohertz repetition rate. This track speed can be realized with suitable actuators 12.8 (e.g. linear axis systems or optical scanners). Having regard to the laser time this results in an area performance of about 0.5 square meters per second (0.5 m²/s). For a 60 x 100 cm² plate (material sandwich) this results in a cycle time of less than 5 seconds (< 5 s), even when taking into account the time required for providing the material sandwich and referencing of axes and scanner. In the exemplary embodiment the proposed method for heat treatment of the material sandwich consumes a laser energy of 3 kilojoule per square meter (3 kJ/m²). Assuming a laser efficiency of 5 percent (the laser efficiency might even be higher), this corresponds to a specific electricity consumption of 60 kilojoule per square meter. Compared hereto, for a conventional heat treatment in an oven 3600 kilojoule per square meter are required to heat a glass plate of a thickness of 4 millimeters and an area of 1 square meter by about 400 degrees.

Using a pulsed carbon dioxide laser 112 for heat treatment of a material layer 102 of a material sandwich 100 comprising the material layer 102 and a substrate 104 according to embodiments of the herein disclosed subject matter provides the advantage of selective heating of the material layer and a substrate portion of the substrate which faces the material layer. In this way the processing speed as may be improved and the energy consumption reduced. In particular, compared to the currently used ovens for heat treatment the method according to embodiments of the herein disclosed subject matter allows to perform the heat treatment continuously in a production line with cycle times in the range of a few seconds. Further the device for heat treatment according to embodiments of the herein disclosed subject matter has a reduced footprint since the long heating and cooling lines can be omitted. Further, the entire substrate is only the slightly heated and therefore tension cracks and deformations of the substrate may be reduced. Embodiments of the herein disclosed subject matter are not limited to anti-reflection layers on glass but can be applied to any material layer on a substrate which contains a silicon oxygen compound and in particular any silicon oxygen compound containing material layer on such a substrate.

According to embodiments of the invention, any suitable entity (e.g. components, units and devices) disclosed herein, e.g. the control units 134, 136, are at least in part provided in the form of respective computer programs which enable the data processor device 138 to provide the functionality of the respective entities as disclosed herein. According to an embodiment, the controller 140 comprises such a data processor device 138. According to other embodiments, any suitable entity disclosed herein (e.g. the control units 134, 136) may be provided in hardware. According to other - hybrid - embodiments, some entities may be provided in software while other entities are provided in hardware.

It should be noted that any entity disclosed herein (e.g. components, units and devices such as the controller 140, etc.) are not limited to a dedicated entity as described in some embodiments. Rather, the herein disclosed subject matter may be implemented in various ways and with various granularity on device level or, where applicable, on software module level while still providing the specified functionality.

Further, it should be noted that according to embodiments a separate entity may be provided for each of the functions disclosed herein. According to other embodiments, an entity is configured for providing two or more functions as disclosed herein. According to still other embodiments, two or more entities are configured for providing together a function as disclosed herein.

According to an embodiment, the controller 140 comprises a data processor device including at least one processor for carrying out at least one computer program corresponding to a respective software module.

It should be noted that the term "comprising" does not exclude other elements or steps and the "a" or "an" does not exclude a plurality. Hence, according to an embodiment the term "comprising" stands for "comprising inter alia". According to further embodiment, the term "comprising" stands for "consisting of". Also elements described in association with different embodiments may be combined. It should also be noted that reference signs in the claims should not be construed as limiting the scope of the claims. It should also be noted that reference signs in the description and the reference of the description to the drawings should not be construed as limiting the scope of the description. Rather, the drawings only illustrate an exemplary implementation of the described embodiments.

Further, it should be noted that while the examples in the drawings include a particular combination of several embodiments of the herein disclosed subject matter, any other combination of embodiment is also possible and is considered to be disclosed with this application.

In order to recapitulate some of the above described embodiments of the present invention one can state:

Described is in particular a method of heat treatment of a material layer 102 of a material sandwich 100 comprising the material layer 102 and a substrate 104, wherein the substrate 104 comprises a silicon-oxygen compound and the material layer 102 comprises a silicon-oxygen compound, the method comprising irradiating the material iayer 102 with a pulsed laser beam 114 of a carbon dioxide laser 112. According to an embodiment the irradiating is performed so as to selectively heat the material layer 102 and a substrate portion 116 of the substrate 104, wherein the substrate portion 116 faces (e.g. contacts) the material layer 102.

## Claims

1. Method of heat treatment of a material layer (102) of a material sandwich (100) comprising the material layer (102) and a substrate (104), the substrate (104) comprising a silicon-oxygen compound and the material layer (102) comprising a silicon-oxygen compound, the method comprising:
irradiating the material layer (102) with a pulsed laser beam (114) of a carbon dioxide laser (112).

2. Method according to claim 1, wherein the substrate (104) is a glass substrate and/or the material layer (102) is a silicate layer.

3. Method according to any one of the preceding claims, wherein the material layer (102) is a porous layer formed by a sol-gel process.

4. Method according to any one of the preceding claims, wherein the irradiating is performed so as to selectively heat the material layer (102) and a substrate portion (116) of the substrate (104), the substrate portion (116) facing the material layer (102).

5. Method according to any one of the preceding claims, wherein the pulse duration of the pulsed laser beam (114) is between 0.01 microseconds and 5 microseconds, in particular between 0.1 and 1 microseconds.

6. Method according to any one of the preceding claims, wherein the areal energy density of a single laser pulse of the pulsed laser beam (114) at a surface (120) of the material layer (102) is between 25 Millijoule per square centimeter and 1000 Millijoule per square centimeter, in particular between 50 Millijoule per square centimeter and 500 Millijoule per square centimeter.

7. Method according to any one of the preceding claims, further comprising:
generating the pulsed laser beam (114) with a transversally excited intermittently pumped carbon dioxide laser (112).

8. Method according to any one of the preceding claims, further comprising:
generating the pulsed laser beam (114) with a Q-switched continuously pumped carbon dioxide laser (112).

9. Method according to any one of the preceding claims wherein the material layer (102) is a surface layer of the material sandwich (100).

10. Use of a pulsed carbon dioxide laser (112) for heat treatment of a material layer (102) of a material sandwich (100) comprising the materia! layer (102) and a substrate (104), in particular for heat treatment of the material layer (102) according to the method according to any one of claims 1 to 9, wherein the substrate (104) comprises a silicon-oxygen compound and the material layer (102) comprises a silicon-oxygen compound.

11. Device (110) for heat treatment, in particular for heat treatment according to a method according to any one of claims 1 to 9, of a material layer (102) of a material sandwich (100), the material sandwich (100) comprising the material layer (102) and a substrate (104), wherein the substrate (104) comprises a silicon-oxygen compound and the material layer (102) comprises a silicon-oxygen compound, the device comprising:
a carbon dioxide laser (112) configured for generating a pulsed laser beam (114) and thereby irradiating the material layer (102) of the material sandwich (100) with the pulsed laser beam (114), thereby performing the heat treatment of the material layer (102).

12. Computer program product in the form of a computer program or in the form of a computer readable medium comprising the computer program, the computer program being configured for, when being executed on a data processor device (138), controlling the method according to any one of claims 1 to 9.

## Amended claims

### Amended claims in accordance with Rule 137(2) EPC.

1. Method of heat treatment of a material layer (102) of a material sandwich (100) comprising the material layer (102) and a substrate (104), the substrate (104) being a glass substrate and comprising a silicon-oxygen compound and the material layer (102) being an antireflection layer and comprising a silicon-oxygen compound, the method comprising:
irradiating the material layer (102) with a pulsed laser beam (114) of a carbon dioxide laser (112).

2. Method according to claim 1, wherein the substrate (104) is a glass substrate and/or the material layer (102) is a silicate layer.

3. Method according to any one of the preceding claims, wherein the material layer (102) is a porous layer formed by a sol-gel process.

4. Method according to any one of the preceding claims, wherein the irradiating is performed so as to selectively heat the material layer (102) and a substrate portion (116) of the substrate (104), the substrate portion (116) facing the material layer (102).

5. Method according to any one of the preceding claims, wherein the pulse duration of the pulsed laser beam (114) is between 0.01 microseconds and 5 microseconds, in particular between 0.1 and 1 microseconds.

6. Method according to any one of the preceding claims, wherein the areal energy density of a single laser pulse of the pulsed laser beam (114) at a surface (120) of the material layer (102) is between 25 Millijoule per square centimeter and 1000 Millijoule per square centimeter, in particular between 50 Millijoule per square centimeter and 500 Millijoule per square centimeter.

7. Method according to any one of the preceding claims, further comprising:
generating the pulsed laser beam (114) with a transversally excited intermittently pumped carbon dioxide laser (112).

8. Method according to any one of the preceding claims, further comprising:
generating the pulsed laser beam (114) with a Q-switched continuously pumped carbon dioxide laser (112).

9. Method according to any one of the preceding claims wherein the material layer (102) is a surface layer of the material sandwich (100).

10. Use of a pulsed carbon dioxide laser (112) for heat treatment of a material layer (102) of a material sandwich (100) comprising the material layer (102) and a substrate (104), in particular for heat treatment of the material layer (102) according to the method according to any one of claims 1 to 9, wherein the substrate (104) is a glass substrate and comprises a silicon-oxygen compound and the material layer (102) is an anti-reflection layer and comprises a silicon-oxygen compound.

11. Device (110) for heat treatment, in particular for heat treatment according to a method according to any one of claims 1 to 9, of a material layer (102) of a material sandwich (100), the material sandwich (100) comprising the material layer (102) and a substrate (104), wherein the substrate (104) is a glass substrate and comprises a silicon-oxygen compound and the material layer (102) is an anti-reflection layer and comprises a silicon-oxygen compound, the device comprising:
a carbon dioxide laser (112) configured for generating a pulsed laser beam (114) and thereby irradiating the material layer (102) of the material sandwich (100) with the pulsed laser beam (114), thereby performing the heat treatment of the material layer (102).

12. Computer program product in the form of a computer program or in the form of a computer readable medium comprising the computer program, the computer program being configured for, when being executed on a data processor device (138), controlling the method according to any one of claims 1 to 9.
